# FASCICULE DE BREVET EUROPEEN

(11) **EP 3 636 908 B1**
(45) Date de publication et mention de la délivrance du brevet: **01.12.2021**
(21) Numéro de dépôt: 19202022.0
(22) Date de dépôt: 08.10.2019
(51) Int. Cl.: F02K 9/46

(54) **MOTEUR-FUSEE AVEC TURBOPOMPE AYANT UN MOTEUR-GENERATEUR**
RAKETENTRIEBWERK MIT TURBOPUMPE EINEN MOTOR-GENERATOR UMFASSEND
ROCKET ENGINE WITH TURBO PUMP HAVING A MOTOR-GENERATOR

(30) Priorité: 11.10.2018 FR 1859445
(43) Date de publication de la demande: 15.04.2020
(73) Titulaire: ArianeGroup SAS, 75015 Paris (FR)
(72) Inventeur: ROZ, Gérard, 27207 VERNON CEDEX (FR); VUILLAMY, Didier, 27207 VERNON CEDEX (FR); BARTHOULOT, Jean-Luc, 27207 VERNON CEDEX (FR)
(74) Mandataire: Cabinet Beau de Loménie

(56) Documents cités:
- EP-A1- 3 318 744
- FR-B1- 2 991 391
- US-A- 5 636 512
- US-B2- 7 735 335

## Description

La présente invention concerne le domaine de l'alimentation de moteurs à réaction et en particulier un moteur-fusée.

Dans la description qui suit les termes "amont" et "aval" sont définis par rapport au sens de circulation normal d'un ergol dans un circuit d'alimentation.

Dans les moteurs à réaction, et plus particulièrement dans les moteurs-fusées, la poussée est typiquement générée par la détente, dans une tuyère d'une chambre propulsive, de gaz de combustion chauds produits par une réaction chimique exothermique au sein de la chambre propulsive. En conséquence, des hautes pressions règnent normalement dans cette chambre propulsive pendant son fonctionnement. Afin de pouvoir continuer à alimenter la chambre de combustion malgré ces hautes pressions, les ergols doivent être introduits à des pressions encore plus élevées. Pour cela, des différents moyens sont connus dans l'état de la technique.

Un premier moyen qui a été proposé est la pressurisation des réservoirs contenant les ergols. Toutefois, cette approche restreint fortement la pression maximale pouvant être atteinte dans la chambre propulsive, et donc l'impulsion spécifique du moteur à réaction. En conséquence, pour atteindre des impulsions spécifiques plus élevées, l'utilisation de pompes d'alimentation est devenue courante. Des différents moyens ont été proposés pour actionner ces pompes, dont le plus courant est leur entraînement par au moins une turbine. Dans une telle turbopompe comprenant une pompe et une turbine couplée mécaniquement à la pompe pour son actionnement, la turbine peut être actionnée à son tour de plusieurs manières différentes. Par exemple, la turbine peut être actionnée par l'expansion de gaz de combustion produits par un générateur de gaz. Toutefois, dans les moteurs-fusées dits à cycle « expander », la turbine est actionnée par l'expansion d'un des ergols après son passage par un échangeur de chaleur dans lequel il a été chauffé par de la chaleur produite dans la chambre propulsive. Ainsi, ce transfert de chaleur peut contribuer simultanément à refroidir les parois de la chambre propulsive et à actionner l'au moins une pompe d'alimentation.

Dans certaines circonstances, il peut être souhaitable d'avoir le choix entre plusieurs niveaux de poussée stables. En particulier, on souhaite désormais que les moteurs-fusées des derniers étages d'engins lanceurs de satellites aient, à part une fonction de mise en orbite de la charge utile, une fonction de désorbitation du dernier étage. Or, pour cette désorbitation, et notamment afin d'assurer la précision du point de chute de ce dernier étage, il est préférable d'avoir un niveau de poussée sensiblement plus réduit que lors de la mise en orbite de la charge utile. Toutefois, tant avec des réservoirs pressurisés comme avec des turbopompes il peut être difficile de faire varier les débits d'ergols fournis à la chambre propulsive, et donc la poussée produite par celle-ci. En outre, sans gavage préalable, les performances des turbopompes sont limitées par des phénomènes de cavitation, en particulier en fin de vidange des réservoirs, ce qui empêche normalement l'utilisation de tout l'ergol contenu initialement dans chaque réservoir.

Pour permettre un pilotage plus précis du débit d'ergol, et donc de la poussée générée par le moteur-fusée, ainsi que pour éviter les phénomènes de cavitation en admission de la pompe de la turbopompe, il a notamment été proposé dans le fascicule de brevet français FR 2 991 391 B1 que la turbopompe comprenne aussi un générateur électrique, actionné aussi par la turbine, et connecté électriquement à une pompe de gavage en amont de la pompe de la turbopompe. Toutefois, même avec cet arrangement, le débit maximal en ergol est limité par la puissance maximale de la turbine. Il en est de même pour le moteur-fusée nucléaire du brevet US 5,636,512.

### Objet et résumé de l'invention

La présente divulgation vise à remédier à ces inconvénients en proposant un moteur-fusée qui permette une plus grande plage de variation de débit d'ergol, et notamment une augmentation, au moins temporaire, de la puissance de pompage et donc du débit d'un ergol pompé, au-delà de la puissance pouvant être fournie par sa turbine.

Ce but peut être atteint, suivant un premier aspect de la présente divulgation, par un moteur-fusée comprenant une chambre propulsive, un circuit d'alimentation pour l'alimentation de la chambre propulsive en un premier ergol, et un autre circuit d'alimentation pour l'alimentation de la chambre propulsive en un deuxième ergol, dans lequel le premier circuit d'alimentation comprend une turbopompe avec, à part une turbine et une pompe couplée mécaniquement à la turbine, un moteur-générateur électrique couplé mécaniquement à pompe et à la turbine. Un tel moteur-générateur électrique peut être apte à convertir de l'énergie mécanique provenant de la turbine de la turbopompe en énergie électrique, mais aussi à convertir de l'énergie électrique en énergie mécanique complémentant celle provenant de la turbine pour actionner la pompe.

Grâce à ces dispositions, une partie de l'énergie mécanique provenant de la turbine, quand celle-ci excède la puissance requise pour actionner la pompe au débit d'ergol souhaité, peut être stockée et/ou utilisée pour alimenter des consommateurs électriques comme par exemple une pompe à actionnement électrique, tandis que de l'énergie électrique stockée et/ou provenant d'une autre source d'énergie électrique, comme par exemple un générateur électrique couplé à une pompe supplémentaire, peut être utilisée à travers le moteur-générateur électrique pour fournir un complément de puissance à la pompe de la turbopompe et ainsi augmenter au moins temporairement le débit d'ergol et donc la poussée du moteur-fusée.

Suivant un deuxième aspect de la présente divulgation, le circuit d'alimentation pour l'alimentation de la chambre propulsive en un premier ergol peut comprendre en outre une pompe de gavage à actionnement électrique en amont de la pompe de la turbopompe, de manière à permettre un pilotage plus précis du débit d'ergol, et donc de la poussée générée par le moteur-fusée, ainsi que pour éviter les phénomènes de cavitation en admission de la pompe de la turbopompe. Cette pompe de gavage à actionnement électrique peut notamment être située à l'intérieur d'un réservoir d'ergol compris aussi dans le circuit d'alimentation. L'intégration de la pompe de gavage à actionnement électrique dans le réservoir d'ergol peut notamment permettre de limiter l'encombrement de l'ensemble

Suivant un troisième aspect de la présente divulgation, le circuit d'alimentation pour l'alimentation de la chambre propulsive en un premier ergol peut comprendre en outre un échangeur de chaleur amont situé en amont de la turbine de la turbopompe. Cet échangeur de chaleur peut notamment être adapté au refroidissement d'une ou plusieurs parois de la chambre propulsive du moteur-fusée. Dans ce contexte, on entend par « chambre propulsive » un ensemble comprenant chambre de combustion et tuyère, y compris le col et le divergent de la tuyère. Ainsi, cet échangeur de chaleur peut permettre non seulement de refroidir les parois de la chambre propulsive pour assurer son intégrité structurelle malgré les contraintes thermiques, mais aussi, en convertissant dans la turbine de la turbopompe l'énergie thermique évacuée par l'ergol dans l'échangeur de chaleur en énergie mécanique par expansion de l'ergol, d'entraîner la pompe de la turbopompe, voire même produire un excédent d'énergie mécanique qui pourra être converti en énergie électrique par le moteur-générateur de la turbopompe.

Alternativement, toutefois, suivant un quatrième aspect de la présente divulgation, le circuit d'alimentation peut comprendre une chambre de combustion située en amont de la turbine de la turbopompe. L'expansion, dans la turbine de la turbopompe, des gaz de combustion provenant de cette chambre de combustion pourra ainsi entraîner la pompe de la turbopompe, voire même produire un excédent d'énergie mécanique qui pourra être converti en énergie électrique par le moteur-générateur de la turbopompe.

Suivant un cinquième aspect de la présente divulgation, le circuit d'alimentation pour l'alimentation de la chambre propulsive en un premier ergol peut comprendre en outre une turbine supplémentaire située en aval de la turbine de la turbopompe, et un générateur électrique couplée mécaniquement à la turbine supplémentaire. Ceux-ci peuvent donc générer un supplément d'énergie électrique pour stockage et/ou utilisation par des consommateurs électriques, tels que par exemple des pompes à actionnement électrique ou le moteur-générateur de la turbopompe en mode moteur.

Suivant un sixième aspect de la présente divulgation, le circuit d'alimentation pour l'alimentation de la chambre propulsive en un premier ergol peut comprendre en outre un échangeur de chaleur aval situé entre la turbine de la turbopompe et la turbine supplémentaire. Cet échangeur de chaleur aval peut aussi être adapté au refroidissement d'une ou plusieurs parois de la chambre propulsive du moteur-fusée, et plus particulièrement du divergent. Ainsi, cet échangeur de chaleur peut permettre non seulement de refroidir les parois de la chambre propulsive, et plus particulièrement du divergent, pour assurer son intégrité structurelle malgré les contraintes thermiques, mais aussi de générer de l'énergie électrique à partir de l'énergie thermique évacuée par l'ergol dans l'échangeur de chaleur aval.

Suivant un septième aspect de la présente divulgation, le circuit d'alimentation pour l'alimentation de la chambre propulsive en un premier ergol peut comprendre en outre un dispositif de stockage d'énergie électrique connecté au moins au moteur-générateur électrique de la turbopompe. Ainsi, l'énergie électrique générée par le moteur-générateur électrique de la turbopompe dans des situations d'excédent d'énergie mécanique de la turbopompe peut être stockée pour être ultérieurement utilisée pour alimenter le moteur-générateur électrique de la turbopompe afin de fournir un supplément de puissance de pompage. Le dispositif de stockage d'énergie électrique peut notamment être une batterie, stockant ainsi l'énergie électrique sous forme d'énergie chimique, mais d'autres types de dispositifs de stockage électrique, comme par exemple les supercondensateurs ou les roues d'inertie, pourraient également être envisagés en complément ou alternativement aux batteries.

Le moteur-fusée peut notamment être un moteur-fusée bi-ergol. L'autre circuit d'alimentation peut comprendre une pompe à actionnement électrique, mais il est aussi envisageable qu'il comprenne une deuxième pompe de la turbopompe, couplée mécaniquement aussi à la turbine et au moteur-générateur de la turbopompe du circuit d'alimentation de la chambre propulsive avec le premier ergol, voire une deuxième turbopompe, indépendante de la turbopompe du circuit d'alimentation pour l'alimentation de la chambre propulsive avec le premier ergol.

Un huitième aspect de la présente divulgation concerne un procédé d'utilisation de la turbopompe du moteur-fusée suivant le premier aspect, comprenant au moins une étape de génération électrique, dans laquelle le moteur-générateur électrique de la turbopompe exploite de l'énergie mécanique provenant de la turbine de la turbopompe pour générer de l'énergie électrique, et une étape d'actionnement mécanique, dans laquelle le moteur-générateur électrique de la turbopompe convertit de l'énergie électrique en de l'énergie mécanique pour complémenter la turbine de la turbopompe dans l'actionnement de la pompe de la turbopompe. De l'énergie électrique générée par le moteur-générateur électrique de la turbopompe peut notamment stockée dans un dispositif de stockage électrique pendant l'étape de génération électrique pour alimenter le moteur-générateur électrique de la turbopompe pendant l'étape d'actionnement électrique.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique d'une turbopompe avec un moteur-générateur électrique,
- la figure 2 est une vue schématique d'un moteur-fusée suivant un premier mode de réalisation, comprenant la turbopompe de la figure 1,
- la figure 3 est une vue schématique d'un moteur-fusée suivant un deuxième mode de réalisation, comprenant la turbopompe de la figure 1,
- la figure 4 est une vue schématique d'un moteur-fusée suivant un troisième mode de réalisation, comprenant la turbopompe de la figure 1,
- la figure 5 est une vue schématique d'un moteur-fusée suivant un quatrième mode de réalisation, comprenant la turbopompe de la figure 1.

### Description détaillée de l'invention

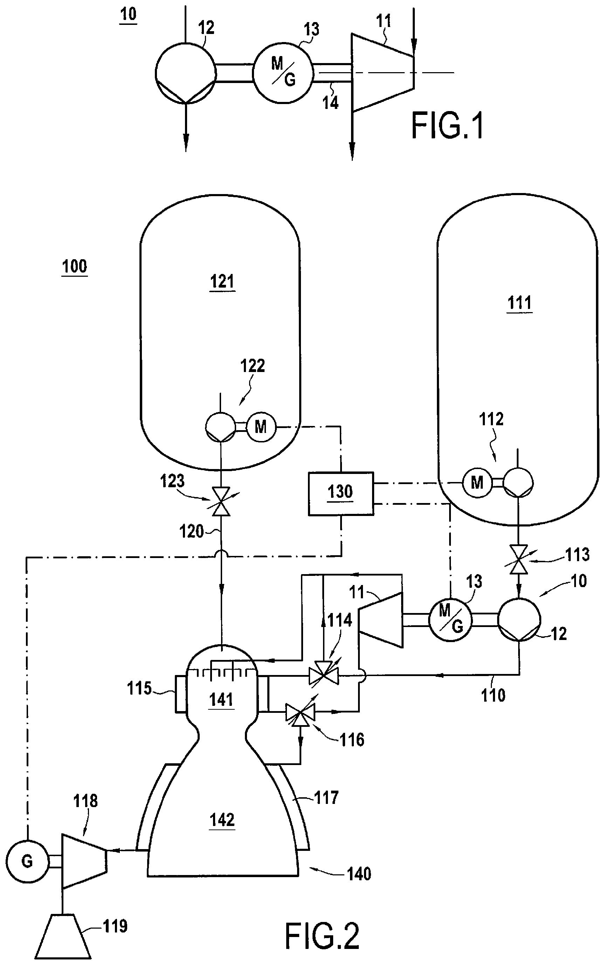

Comme illustré sur la figure 1, une turbopompe 10 pour moteur fusée suivant le premier aspect de cette divulgation peut comprendre une turbine 11, une pompe 12, et un moteur-générateur électrique 13. La turbine 11, la pompe 12, et le moteur-générateur électrique 13 peuvent être couplés mécaniquement par un arbre de transmission 14 commun, comme illustré, bien que d'autres moyens de transmission mécanique, comme par exemple des engrenages, chaînes, courroies, et/ou embrayages soient également envisageables alternativement ou en complément à un arbre de transmission. Ainsi, en fonctionnement, le passage d'un fluide de travail à travers la turbine 11 peut générer de l'énergie mécanique, tandis que de l'énergie mécanique est utilisée pour actionner la pompe 12. Le moteur-générateur électrique 13 peut, dans une étape de génération électrique, exploiter de l'énergie mécanique provenant de la turbine de la turbopompe pour générer de l'énergie électrique et, dans une étape d'actionnement mécanique, convertit de l'énergie électrique en de l'énergie mécanique pour complémenter la turbine de la turbopompe dans l'actionnement de la pompe de la turbine. L'équilibre entre la puissance générée par la turbine 11 et celle consommée par la pompe 12 peut ainsi être géré à travers le moteur-générateur électrique 13, tandis que de l'énergie électrique générée par le moteur-générateur électrique 13 peut être stockée pendant l'étape de génération électrique pour alimenter subséquemment le moteur-générateur électrique 13 pendant l'étape d'actionnement électrique.

Le moteur-générateur électrique 13 peut être connecté à un réseau électrique comportant des moyens de stockage pour stocker de l'énergie électrique générée par le moteur-générateur électrique 13 pendant l'étape de génération électrique. Ces moyens de stockage pourront aussi alimenter le moteur-générateur électrique 13 pendant l'étape d'actionnement électrique, quoiqu'il est également envisageable, en complément ou alternativement aux moyens de stockage électrique, d'avoir aussi, dans ce réseau électrique, d'autres consommateurs électriques pouvant consommer de l'énergie électrique générée par le moteur-générateur électrique 13 pendant l'étape de génération électrique, et/ou d'autres sources électriques pouvant alimenter le moteur générateur électrique 13 pendant l'étape d'actionnement électrique.

Ainsi, dans un premier mode de réalisation illustré sur la figure 2, un premier circuit d'alimentation 110 servant à alimenter en un premier ergol une chambre propulsive 140 d'un moteur-fusée 100 peut comprendre, dans un sens d'écoulement du premier ergol : un réservoir 111 pour le premier ergol, une pompe de gavage 112 à actionnement électrique, une vanne 113 de régulation de débit, la pompe 12 de la turbopompe 10, une première vanne 114 de répartition de débit, un échangeur de chaleur amont 115, une deuxième vanne 116 de répartition de débit, un échangeur de chaleur aval 117, et une turbine supplémentaire 118 couplée mécaniquement à un générateur électrique et une tuyère secondaire 119. La turbine 11 de la turbopompe 10 peut aussi être comprise dans le premier circuit d'alimentation 110, interposée entre la deuxième vanne 116 de répartition de débit et les injecteurs du premier ergol dans la chambre propulsive 140. La première vanne 114 de répartition de débit peut être configurée et disposée pour répartir le débit du premier ergol sortant de la pompe 12 entre une première fraction continuant vers l'échangeur de chaleur amont 115, et une deuxième fraction dirigée directement vers les injecteurs dans la chambre de combustion 141 de la chambre propulsive 140 à travers un conduit de contournement. L'échangeur de chaleur amont 115 peut être disposé autour de la chambre de combustion 141 pour refroidir ses parois tout en réchauffant la deuxième fraction du premier ergol. La deuxième vanne 116 de répartition de débit peut être configurée et disposée pour répartir encore cette deuxième fraction du premier ergol entre une première sous-fraction dirigée vers la turbine 11 et les injecteurs dans la chambre de combustion 141, et une deuxième sous-fraction dirigée vers l'échangeur de chaleur aval 117, la turbine supplémentaire 118 et la tuyère secondaire 119.

Le moteur-fusée 100 peut comprendre en outre un deuxième circuit d'alimentation 120 pour alimenter la chambre propulsive 140 en un deuxième ergol. Comme illustré, ce deuxième circuit d'alimentation 120 peut comprendre, dans le sens de l'écoulement du deuxième ergol, un réservoir 121 pour le deuxième ergol, une pompe 122 à actionnement électrique et une vanne 123 de régulation de débit. En outre, le moteur-fusée 100, tel qu'illustré, peut aussi comprendre un réseau électrique comprenant au moins un dispositif de stockage électrique 130 connecté aux pompes à actionnement électrique 112, 122, au moteur-générateur électrique 13, et au générateur électrique de la turbine supplémentaire 118. Ainsi, de l'énergie électrique générée par le moteur-générateur électrique 13 et/ou par le générateur électrique de la turbine supplémentaire 118 peut être transmise au dispositif de stockage électrique 130 pour stockage et/ou aux pompes à actionnement électrique 112, 122 pour leur actionnement, et de l'énergie électrique stockée au dispositif de stockage électrique 130 peut être transmise au moteur-générateur électrique 13 et/ou aux pompes à actionnement électrique 112, 122 pour leur actionnement.

Pendant le fonctionnement du moteur-fusée 100, le premier ergol peut être extrait de son réservoir 111 à travers la pompe de gavage 112 et la vanne de régulation 113 pour traverser ensuite la pompe 12 de la turbopompe 10. La vanne 114 de répartition de débit peut diviser ensuite le débit du premier ergol sortant de la pompe 12 entre une première fraction, qui peut être dirigée directement vers la chambre de combustion 141 à travers les injecteurs, et une deuxième fraction qui peut traverser ensuite l'échangeur de chaleur amont 115 pour refroidir les parois de la chambre de combustion 141 et y être réchauffée. Ensuite, la deuxième vanne 116 de répartition de débit peut diviser encore cette deuxième fraction du débit du premier ergol entre une première sous-fraction et une deuxième sous-fraction. La première sous-fraction peut alors traverser la turbine 11 de la turbopompe 10 pour actionner la pompe 12 et éventuellement le moteur-générateur électrique 13 en mode générateur, et rejoindre la première fraction du débit du premier ergol pour être injectée ensemble avec cette première fraction dans la chambre de combustion 141, tandis que la deuxième sous-fraction peut traverser l'échangeur de chaleur aval 117 pour refroidir les parois du divergent 142 et y être réchauffé avant de traverser la turbine supplémentaire 118 et actionner ainsi son générateur électrique, et ensuite être expulsée à travers la tuyère secondaire 119.

En même temps, le deuxième ergol peut être extrait de son réservoir 121 à travers la pompe 122 et la vanne de régulation 123 pour être injecté aussi dans la chambre de combustion 141, où sa réaction exothermique et expansion subséquente à travers le col de tuyère et le divergent 142 peuvent générer une poussée conséquente. Ainsi, à travers la commande des vannes 113, 114, 116 et 123 et la régulation électrique des pompes 112 et 122, du moteur-générateur 13 et du générateur couplé à la turbine supplémentaire 118, il est possible de réguler le débit des premier et deuxième ergols qui est fourni à la chambre de combustion, et donc la poussée générée par la chambre propulsive 140.

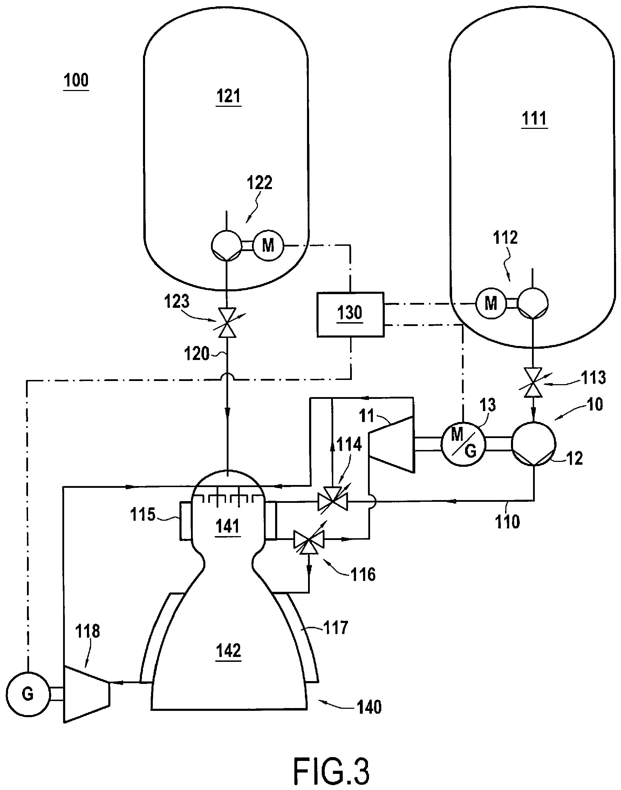

Bien que, dans le mode de réalisation illustré sur la figure 2 la deuxième sous-fraction du premier ergol soit finalement éjectée à travers la tuyère secondaire 119, il est également envisageable de l'injecter encore dans la chambre de combustion 141 en aval de la turbine supplémentaire 118, comme dans le mode de réalisation illustré sur la figure 3, dans lequel la turbine supplémentaire 118 peut être connectée en aval avec les injecteurs du premier ergol dans la chambre de combustion 141. Les éléments restants du moteur-fusée 100 de la figure 3 pouvant être équivalents et fonctionner de manière analogue à ceux de la figure 2, ils reçoivent donc les mêmes repères.

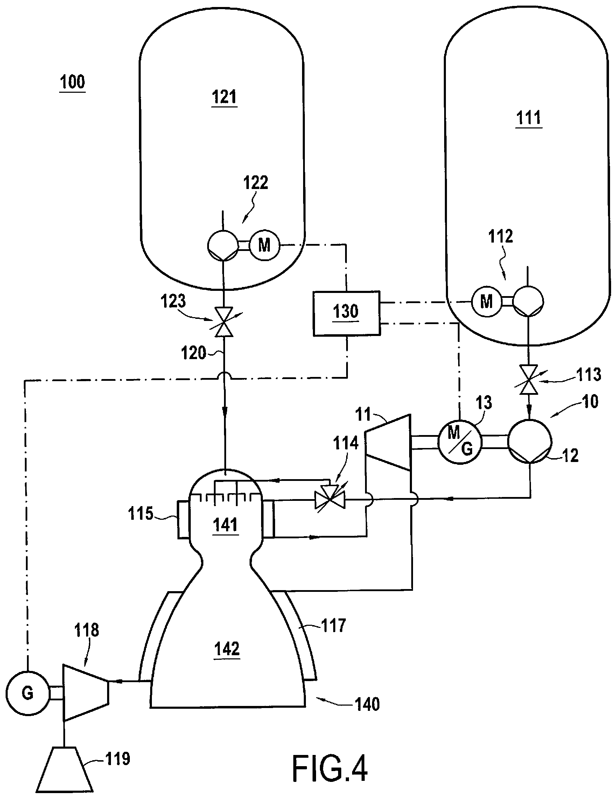

Alternativement, il est également envisageable de ne pas sous-diviser la deuxième fraction du premier ergol en aval de l'échangeur de chaleur amont 115, mais de faire circuler l'intégralité de cette deuxième fraction successivement à travers la turbine 11, l'échangeur de chaleur aval 117, et la turbine supplémentaire 118, pour l'expulser finalement vers l'extérieur à travers la tuyère secondaire 119. Le premier circuit d'alimentation 110 peut ainsi être simplifié comme illustré sur la figure 4, en supprimant notamment la deuxième vanne de répartition de débit 116. Les éléments restants du moteur-fusée 100 de la figure 4 pouvant être équivalents et fonctionner de manière analogue à ceux de la figure 2, ils reçoivent donc les mêmes repères.

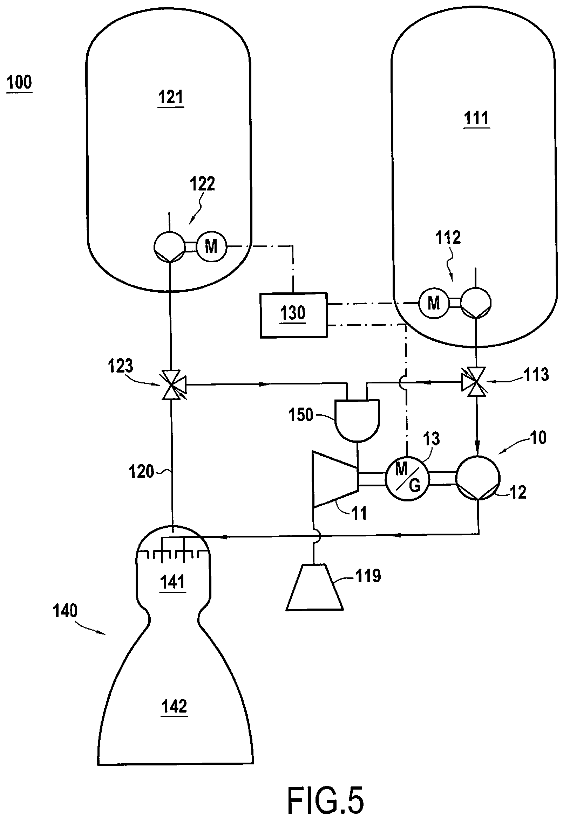

Finalement, quoique dans chacun des moteurs-fusées des figures 2 à 4, la turbine 11 de la turbopompe 10 soit actionnée par l'expansion d'un ergol réchauffé par la chaleur de la chambre propulsive 140 dans un cycle dit « expander », il est également envisageable d'utiliser des gaz de combustion pour actionner la turbine 11 de la turbopompe 10. Ainsi, comme illustré sur la figure 5, le moteur-fusée 100 peut comprendre en outre une chambre de combustion 150 supplémentaire, et les vannes de régulation 113, 123 être des vannes de répartition de débit à trois voies connectées aussi à cette chambre de combustion 150 pour y dériver une partie des premier et deuxième ergols circulant à travers les circuits d'alimentation 110, 120. La chambre de combustion 150 peut être connectée en amont de la turbine 11 afin de l'alimenter en gaz de combustion, et l'échappement de la turbine 11 déboucher directement sur la tuyère secondaire 119. Les éléments restants du moteur-fusée 100 de la figure 5 pouvant être équivalents et fonctionner de manière analogue à ceux de la figure 2, ils reçoivent donc les mêmes repères.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Moteur-fusée (100) comprenant une chambre propulsive (140) et un circuit d'alimentation (110) pour l'alimentation de la chambre propulsive (140) en un premier ergol, le circuit d'alimentation (110) comprenant une turbopompe (10) comprenant au moins :
une turbine (11),
une pompe (12) couplée mécaniquement à la turbine (11), et
un moteur-générateur électrique (13) couplé mécaniquement à la pompe (12) et à la turbine (11) ; et
le moteur-fusée (100) comprenant un autre circuit d'alimentation (120) pour l'alimentation de la chambre propulsive (140) en un deuxième ergol.

2. Moteur-fusée (100) suivant la revendication 1, dans lequel le circuit d'alimentation (110) pour l'alimentation de la chambre propulsive (140) en un premier ergol comprend en outre une pompe de gavage (112) à actionnement électrique en amont de la pompe (12) de la turbopompe (10).

3. Moteur-fusée (100) suivant la revendication 2, dans lequel le circuit d'alimentation (110) pour l'alimentation de la chambre propulsive (140) en un premier ergol comprend en outre un réservoir d'ergol (111), la pompe de gavage (112) à actionnement électrique étant située à l'intérieur du réservoir d'ergol (111).

4. Moteur-fusée (100) suivant l'une quelconque des revendications 1 à 3, dans lequel le circuit d'alimentation (110) pour l'alimentation de la chambre propulsive (140) en un premier ergol comprend en outre un échangeur de chaleur amont (115) situé en amont de la turbine (11) de la turbopompe (10).

5. Moteur-fusée (100) suivant l'une quelconque des revendications 1 à 3, dans lequel le circuit d'alimentation (110) pour l'alimentation de la chambre propulsive (140) en un premier ergol comprend en outre une chambre de combustion (150) située en amont de la turbine (11) de la turbopompe (10).

6. Moteur-fusée (100) suivant l'une quelconque des revendications 1 à 5, dans lequel le circuit d'alimentation (110) pour l'alimentation de la chambre propulsive (140) en un premier ergol comprend en outre une turbine supplémentaire (118) située en aval de la turbine (11) de la turbopompe (10), et un générateur électrique couplée mécaniquement à la turbine supplémentaire (118).

7. Moteur-fusée (100) suivant la revendication 6, dans lequel le circuit d'alimentation (110) pour l'alimentation de la chambre propulsive (140) en un premier ergol comprend en outre un échangeur de chaleur aval (117) situé entre la turbine (11) de la turbopompe (10) et la turbine supplémentaire (118).

8. Moteur-fusée (100) suivant l'une quelconque des revendications 1 à 7, dans lequel le circuit d'alimentation (110) pour l'alimentation de la chambre propulsive (140) en un premier ergol comprend en outre un dispositif de stockage d'énergie électrique (130) connecté au moins au moteur-générateur électrique (13) de la turbopompe (10).

9. Moteur-fusée (100) suivant l'une quelconque des revendications 1 à 8, dans lequel l'autre circuit d'alimentation (120) comprend une pompe à actionnement électrique (122).

10. Procédé d'utilisation de la turbopompe (10) du moteur-fusée (100) suivant l'une quelconque des revendications 1 à 9, comprenant au moins :
une étape de génération électrique, dans laquelle le moteur-générateur électrique (13) de la turbopompe (10) exploite de l'énergie mécanique provenant de la turbine (11) de la turbopompe (10) pour générer de l'énergie électrique, et
une étape d'actionnement mécanique, dans laquelle le moteur-générateur électrique (13) de la turbopompe (10) convertit de l'énergie électrique en de l'énergie mécanique pour complémenter la turbine (11) de la turbopompe (10) dans l'actionnement de la pompe (12) de la turbopompe (10).

11. Procédé suivant la revendication 10, dans lequel de l'énergie électrique générée par le moteur-générateur électrique (13) de la turbopompe (10) est stockée dans un dispositif de stockage électrique (130) pendant l'étape de génération électrique pour alimenter le moteur-générateur électrique (13) de la turbopompe (10) pendant l'étape d'actionnement électrique.

## Patentansprüche

1. Raketentriebwerk (100), umfassend eine Antriebskammer (140) und ein Versorgungskreislauf (110) für die Versorgung der Antriebskammer (140) mit einem ersten Treibstoff, wobei das Versorgungskreislauf (110) eine Turbopumpe (10) umfasst, die mindestens umfasst:
eine Turbine (11),
eine Pumpe (12), die mechanisch an die Turbine (11) gekoppelt ist, und
einen elektrischen Motor-Generator (13), der mechanisch an die Pumpe (12) und an die Turbine (11) gekoppelt ist, und
wobei das Raketentriebwerk (100) ein weiteres Versorgungskreislauf (120) für die Versorgung der Antriebskammer (140) mit einem zweiten Treibstoff umfasst.

2. Raketentriebwerk (100) nach Anspruch 1, wobei das Versorgungskreislauf (110) für die Versorgung der Antriebskammer (140) mit einem ersten Treibstoff ferner eine Speisepumpe (112) mit elektrischer Betätigung stromaufwärts der Pumpe (12) der Turbopumpe (10) umfasst.

3. Raketentriebwerk (100) nach Anspruch 2, wobei das Versorgungskreislauf (110) für die Versorgung der Antriebskammer (140) mit einem ersten Treibstoff ferner ein Treibstoffreservoir (111) umfasst, wobei sich die Speisepumpe (112) mit elektrischer Betätigung innerhalb des Treibstoffreservoirs (111) befindet.

4. Raketentriebwerk (100) nach einem der Ansprüche 1 bis 3, wobei das Versorgungskreislauf (110) für die Versorgung der Antriebskammer (140) mit einem ersten Treibstoff ferner einen vorderen Wärmetauscher (115) umfasst, der sich stromaufwärts der Turbine (11) der Turbopumpe (10) befindet.

5. Raketentriebwerk (100) nach einem der Ansprüche 1 bis 3, wobei das Versorgungskreislauf (110) für die Versorgung der Antriebskammer (140) mit einem ersten Treibstoff ferner eine Brennkammer (150) umfasst, die sich stromaufwärts der Turbine (11) der Turbopumpe (10) befindet.

6. Raketentriebwerk (100) nach einem der Ansprüche 1 bis 5, wobei das Versorgungskreislauf (110) für die Versorgung der Antriebskammer (140) mit einem ersten Treibstoff ferner eine zusätzliche Turbine (118), die sich stromabwärts der Turbine (11) der Turbopumpe (10) befindet, und einen elektrischen Generator umfasst, der mechanisch an die zusätzliche Turbine (118) gekoppelt ist.

7. Raketentriebwerk (100) nach Anspruch 6, wobei das Versorgungskreislauf (110) für die Versorgung der Antriebskammer (140) mit einem ersten Treibstoff ferner einen hinteren Wärmetauscher (117) umfasst, der sich zwischen der Turbine (11) der Turbopumpe (10) und der zusätzlichen Turbine (118) befindet.

8. Raketentriebwerk (100) nach einem der Ansprüche 1 bis 7, wobei das Versorgungskreislauf (110) für die Versorgung der Antriebskammer (140) mit einem ersten Treibstoff ferner eine Speichervorrichtung für elektrische Energie (130) umfasst, die mindestens mit dem elektrischen Motor-Generator (13) der Turbopumpe (10) verbunden ist.

9. Raketentriebwerk (100) nach einem der Ansprüche 1 bis 8, wobei das weitere Versorgungskreislauf (120) eine Pumpe mit elektrischer Betätigung (122) umfasst.

10. Verfahren zur Verwendung der Turbopumpe (10) des Raketentriebwerks (100) nach einem der Ansprüche 1 bis 9, umfassend mindestens:
einen Schritt der elektrischen Erzeugung, in dem der elektrische Motor-Generator (13) der Turbopumpe (10) mechanische Energie nutzt, die von der Turbine (11) der Turbopumpe (10) kommt, um die elektrische Energie zu erzeugen, und
einen Schritt der mechanischen Betätigung, wobei der elektrische Motor-Generator (13) der Turbopumpe (10) elektrische Energie in mechanische Energie umwandelt, um die Turbine (11) der Turbopumpe (10) bei der Betätigung der Pumpe (12) der Turbopumpe (10) zu ergänzen.

11. Verfahren nach Anspruch 10, wobei die elektrische Energie, die von dem elektrischen Motor-Generator (13) der Turbopumpe (10) erzeugt wird, in einer Vorrichtung zur elektrischen Speicherung (130) während des Schrittes der elektrischen Erzeugung gespeichert wird, um den elektrischen Motor-Generator (13) der Turbopumpe (10) während des Schrittes der mechanischen Betätigung zu versorgen.

## Claims

1. A rocket engine (100) comprising a propulsion chamber (140) and a supply circuit (110) for supplying the propulsion chamber (140) with a first propellant, the supply circuit (110) comprising a turbopump (10) comprising at least:
a turbine (11),
a pump (12) mechanically coupled to the turbine (11), and
an electric motor-generator (13) mechanically coupled to the pump (12) and to the turbine (11); and
the rocket engine (100) comprising another supply circuit (120) for supplying the propulsion chamber (140) with a second propellant.

2. The rocket engine (100) according to claim 1, wherein the supply circuit (110) for supplying the propulsion chamber (140) with a first propellant further comprises an electrically-operated booster pump (112) upstream of the pump (12) of the turbopump (10).

3. The rocket engine (100) according to claim 2, wherein the supply circuit (110) for supplying the propulsion chamber (140) with a first propellant further comprises a propellant reservoir (111), the electrically-operated booster pump (112) being located inside the propellant tank (111).

4. The rocket engine (100) according to any one of claims 1 to 3, wherein the supply circuit (110) for supplying the propulsion chamber (140) with a first propellant further comprises an upstream heat exchanger (115) located upstream the turbine (11) of the turbopump (10).

5. The rocket engine (100) according to any one of claims 1 to 3, wherein the supply circuit (110) for supplying the propulsion chamber (140) with a first propellant further comprises a combustion chamber (150) located upstream of the turbine (11) of the turbopump (10).

6. The rocket engine (100) according to any one of claims 1 to 5, wherein the supply circuit (110) for supplying the propulsion chamber (140) with a first propellant further comprises an additional turbine (118) located downstream of the turbine (11) of the turbopump (10), and an electric generator mechanically coupled to the additional turbine (118).

7. The rocket engine (100) according to claim 6, wherein the supply circuit (110) for supplying the propulsion chamber (140) with a first propellant further comprises a downstream heat exchanger (117) located between the turbine (11) of the turbopump (10) and the additional turbine (118).

8. The rocket engine (100) according to any one of claims 1 to 7, wherein the supply circuit (110) for supplying the propulsion chamber (140) with a first propellant further comprises an electrical energy storage device (130) connected at least to the electric motor generator (13) of the turbopump (10).

9. The rocket engine (100) according to any one of claims 1 to 8, wherein the other supply circuit (120) comprises an electrically-operated pump (122).

10. A method for using the turbopump (10) of the rocket engine (100) according to any one of claims 1 to 9, comprising at least:
an electrical generation step, in which the electric motor generator (13) of the turbopump (10) utilizes mechanical energy coming from the turbine (11) of the turbopump (10) to generate electrical energy, and
a mechanical actuation step, in which the electric motor generator (13) of the turbopump (10) converts electrical energy into mechanical energy to complement the turbine (11) of the turbopump (10) in the actuation of the pump (12) of the turbopump (10).

11. The method according to claim 10, wherein electrical energy generated by the electric motor generator (13) of the turbopump (10) is stored in an electrical storage device (130) during the electrical generation step to supply the electric motor generator (13) of the turbopump (10) during the electrical actuation step.
